# EUROPÄISCHE PATENTSCHRIFT

(11) **EP 1 896 372 B1**
(45) Veröffentlichungstag und Bekanntmachung des Hinweises auf die Patenterteilung: **21.03.2012**
(21) Anmeldenummer: 06763728.0
(22) Anmeldetag: 14.06.2006
(51) Int. Cl.: C02F 1/68, C02F 5/14, C13B 30/00

(54) **VERWENDUNG VON ALKYLENOXIDEINHEITEN ENTHALTENDEN COPOLYMEREN ALS ZUSATZ ZU WÄSSRIGEN SYSTEMEN**
USE OF COPOLYMERS CONTAINING ALKYLENE OXIDE UNITS AS AN ADDITIVE TO AQUEOUS SYSTEMS
UTILISATION DE COPOLYMERES CONTENANT DES UNITES D'OXYDE D'ALKYLENE EN TANT QU'ADDITIFS A DES SYSTEMES AQUEUX

(30) Priorität: 17.06.2005 DE 102005028460
(43) Veröffentlichungstag der Anmeldung: 12.03.2008
(73) Patentinhaber: BASF SE, 67056 Ludwigshafen (DE)
(72) Erfinder: NIED, Stephan, 67435 Neustadt / Wstr. (DE); BÜCHNER, Karl-Heinz, 68804 Altlussheim (DE); GUZMANN, Marcus, 69242 Mühlhausen (DE)
(86) Internationale Anmeldenummer: PCT/EP2006/063234
(87) Internationale Veröffentlichungsnummer: WO 2006/134140

(56) Entgegenhaltungen:
- WO-A-03/104373
- WO-A-2005/042684

## Beschreibung

Die vorliegende Erfindung betrifft die Verwendung von Alkylenoxideinheiten enthaltenden Copolymeren, die
(a) 50 bis 93 mol-% Acrylsäure und/oder eines wasserlöslichen Salzes der Acrylsäure,
(b) 5 bis 30 mol-% Methacrylsäure und/oder eines wasserlöslichen Salzes der Methacrylsäure und
(c) 2 bis 20 mol-% mindestens eines nichtionischen Monomers der Formel I 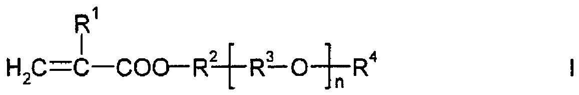 in der die Variablen folgende Bedeutung haben:
   - R¹: Wasserstoff oder Methyl;
   - R²: eine chemische Bindung oder unverzweigtes oder verzweigtes C₁-C₆-Alkylen;
   - R³: gleiche oder verschiedene unverzweigte oder verzweigte C₂-C₄-Alkylenreste;
   - R⁴: unverzweigtes oder verzweigtes C₁-C₆-Alkyl;
   - n: 3 bis 50,
statistisch oder blockweise einpolymerisiert enthalten, als Zusatz zu Phosphonat ausgewählt aus der Gruppe bestehend aus 1-Hydroxyethan-1,1-diphosphonsäure (HEDP), 2-Phosphonobutan-1,2,4-tricarbonsäure (GBTC), Aminotrimethylenphosphonsäure (ATMP), Ethylendiamintetramethylenphosphonat, Hexamethylendiamintetramethylphosphonat und Diethylentriaminpentamethylphosphonat enthaltenden wäßrigen Systemen in industriellen technischen Anlagen.

Außerdem betrifft die Erfindungen Formulierungen zur Wasserbehandlung und zur Korrosionsinhibierung, die diese Copolymere und Polyphosphate und/oder Phosphonate enthalten.

Wäßrige Systeme, die wärmeübertragender Bestandteil von industriellen technischen Anlagen sind, werden üblicherweise durch Zusatz verschiedener Substanzen stabilisiert.

So werden diesen Kühl- bzw. Wärmemedien üblicherweise phosphorhaltige Formulierungen zur Verminderung der Bildung von Ablagerungen und der Korrosion zugesetzt.

Hierbei handelt es sich insbesondere um lineare oder ringförmige Polyphosphate und Phosphonate, wie die Natriumsalze von 1-Hydroxyethan-1,1-diphosphonsäure (HEDP), 2-Phosphonobutan-1,2,4-tricarbonsäure (GBTC) und Aminotrimethylenphosphonsäure (ATMP). Die Polyphosphate und Phosphonate halten die härtebildenden Calcium- und Magnesiumionen des Wassers in Lösung und wirken zusätzlich korrosionsinhibierend, indem sie mit den im System vorhandenen Metallionen, insbesondere Eisen(II)- und Calciumionen, einen dünnen Schutzfilm auf der Metalloberfläche des Systems bilden. Insbesondere bei hohen Wasserhärten können sich jedoch ungewollt dicke Calciumphosphonat- und -phosphatbeläge sowie partikuläre Calciumphosphonat- und -phosphatagglomerate bilden, die das Leitungssystem verstopfen. Zusätzlich kommt es oftmals insbesondere durch Hydrolyse der Polyphosphate zur Abscheidung von Calciumphosphat.

Zur Verringerung dieser unerwünschten Nebeneffekte und damit zur Stabilisierung der Polyphosphate und Phosphonate werden organische Polymere, u.a. auch solche auf Basis von Copolymeren alkylenoxidhaltiger Monomere, eingesetzt. Hierbei handelt es sich insbesondere um Copolymere einer ungesättigten Carbonsäure, wie Acrylsäure, Methacrylsäure oder Maleinsäure, mit Polyalkylenglykolallylethern (EP-A-554 074, JP-A-56-81 320, JP-A-57-84 794, JP-A-57-185 308). In der EP-A-1 158 009 werden für diesen Zweck Copolymere_von Acrylsäure_mit niedermolekularen Monomeren auf Allyletherbasis offenbart.

Das Dokument WO2005/042684 offenbart die Verwendung von Alkylenoxideinheiten enthaltenden Copolymeren als belagsinhibierende Additive im Klarspülgang des maschinellen Geschirrspülers. Zu diesem Zweck werden hier anorganische Phosphonate verwendet.

In der JP-A-63-89 687 werden Copolymere von Acrylsäure oder Methacrylsäure und Polyalkylenglykolmethacrylaten in Kombination mit stickstoffhaltigen Heterocyclen als alternative Korrosionsinhibitoren für Stahl und Kupfer eingesetzt.

Alkylenoxidhaltige Copolymere werden auch als Inhibitor insbesondere silikatischer Beläge in Wasserkreisläufen beschrieben. So werden in der JP-A-2000-24691 Copolymere von ungesättigten Carbonsäuren und Polyalkylenoxideinheiten enthaltenden Monomeren mit mittleren Molekulargewichten-M_{w}-von > 50 000 bis 3 000 000 für diesen Zweck beansprucht. Im einzelnen offenbart werden Copolymere von Acrylsäure und Methoxypolyethylenglykolmethacrylat. Gemäß der JP-A-10-57 988 kann es sich hierbei auch um Copolymere auf Basis von Acrylsäure oder Maleinsäure und Polyalkylenglykolvinylethem handeln.

Terpolymere auf Basis von Acrylsäure, Methacrylsäure und Polyalkylenglykolmethacrylaten wurden bislang als Dispergiermittel und/oder Mahlhilfsmittel für mineralische Pigmente in der Papierindustrie (US-A-2004/019148) oder inkrustierungsinhibierender Zusatz zu Wasch- und Reinigungsmitteln (WO-A-03/104373) beschrieben. Keine dieser Anwendungen ist jedoch mit dem vorliegenden Anwendungsgebiet vergleichbar, das über deutlich längere Zeiträume ungleich höhere Anforderungen an die Alkali- und Temperaturstabilität der Polymere stellt.

Schließlich können Phosphationen auch im Wasser selbst als natürlicher Bestandteil enthalten sein, was insbesondere bei Wässern aus Flüssen oder Seen der Fall sein kann, und so in wäßrige technische Systeme eingeschleppt werden und zur unerwünschten Bildung von Phosphatniederschlägen und -belägen führen.

Als Beispiel hierfür sei die Zuckerindustrie genannt. Das hier zum Waschen der Zuckerrüben eingesetzte Wasser enthält oftmals Phosphat, das beim Eindampfen der angefallenen wäßrigen Zuckerlösungen (des sogenannten Zuckersafts) mitausfällt und von den ebenfalls ausfallenden Zuckerkristallen mühsam getrennt werden muß.

Der Erfindung lag daher die Aufgabe zugrunde, Polymere bereitzustellen, die Phosphat- und Phosphbnationen in wäßrigen Systemen stabilisieren können und die Bildung unerwünschter schwerlöslicher Phosphat- und Phosphonatniederschläge inhibieren können.

Demgemäß wurde die Verwendung von Alkylenoxideinheiten enthaltenden Copolymeren, die
(a) 50 bis 93 mol-% Acrylsäure und/oder eines wasserlöslichen Salzes der Acrylsäure,
(b) 5 bis 30 mol-% Methacrylsäure und/oder eines wasserlöslichen Salzes der Methacrylsäure und
(c) 2 bis-20-mol-% mindestens eines nichtionischen Monomers der Formel I 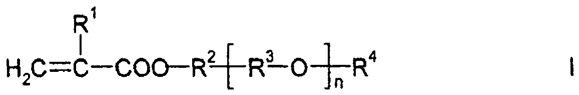 in der die Variablen folgende Bedeutung haben:
   - R¹: Wasserstoff oder Methyl;
   - R²: eine chemische Bindung oder unverzweigtes oder verzweigtes C₁-C₆-Alkylen;
   - R³: gleiche oder verschiedene unverzweigte oder verzweigte C₂-C₄-Alkylenreste;
   - R⁴: unverzweigtes oder verzweigtes C₁-C₆-Alkyl;
   - n: 3 bis 50,
statistisch oder blockweise einpolymerisiert enthalten, als Zusatz zu Phosphonat ausgewählt aus der Gruppe bestehend aus 1-Hydroxyethan-1,1-diphosphonsäure (HEDP), 2-Phosphonobutan-1,2,4-tricarbonsäure (GBTC), Aminotrimethylenphosphonsäure (ATMP), Ethylendiamintetramethylenphosphonat, Hexamethylendiamintetramethylphosphonat und Diethylentriaminpentamethylphosphonat enthaltenden wäßrigen Systemen in industriellen technischen Anlagen, gefunden.

Außerdem wurden Formulierungen zur Wasserbehandlung und zum Korrosionsschutz gefunden, die diese Copolymere und Polyphosphate und-oder Phosphonate enthalten.

Die erfindungsgemäß zu verwendenden Alkylenoxideinheiten enthaltenden Copolymere enthalten als einpolymerisierte Komponenten (a) und (b) Acrylsäure bzw. Methacrylsäure und/oder wasserlösliche Salze dieser Säuren, insbesondere die Alkalimetallsalze, wie Kalium- und vor allem Natriumsalze, und Ammoniumsalze.

Der Anteil Acrylsäure (a) an den erfindungsgemäß zu verwendenden Copolymeren beträgt 50 bis 93 mol-%, bevorzugt 65 bis 85 mol-% und besonders bevorzugt 65 bis 75 mol-%.

Methacrylsäure (b) ist in den erfindungsgemäß zu verwendenden Copolymeren zu 5 bis 30 mol-%, vorzugsweise zu 10 bis 25 mol % und vor allem zu 15 bis 25 mol-% enthalten.

Die Copolymere enthalten als Komponente (c) nichtionische Monomere der Formel I 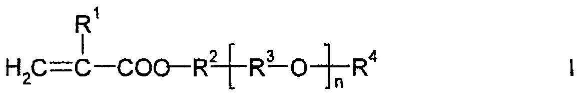 in der die Variablen folgende Bedeutung haben:
- R¹: Wasserstoff oder Methyl, vorzugsweise Methyl;
- R²: eine chemische Bindung oder unverzweigtes oder verzweigtes C₁-C₆-Alkylen, vorzugsweise eine chemische Bindung;
- R³: gleiche oder verschiedene unverzweigte oder verzweigte C₂-Cₐ-Alkylenreste, bevorzugt C₂-C₃-Alkylenreste, besonders bevorzugt Ethylen;
- R⁴: unverzweigtes oder verzweigtes C₁-C₆-Alkyl, vorzugsweise C₁-C₂-Alkyl;
- n: 3 bis 50, bevorzugt 5 bis 40, besonders bevorzugt 10 bis 30.

Als besonders geeignete Beispiele für die Monomere I seien genannt: Methoxypolyethylenglykol(meth)acrylat, Methoxypolypropylenglykol(meth)acrylat, Methoxypolybutylenglykol(meth)acrylat, Methoxypoly(propylenoxid-co-ethylenoxid)(meth)acrylat, Ethoxypolyethylenglykol(meth)acrylat, Ethoxypolypropylenglykol(meth)acrylat, Ethoxypolybutylenglykol(meth)acrylat und Ethoxypoly(propylenoxid-co-ethylenoxid)(meth)acrylat, wobei Methoxypolyethylenglykol(meth)acrylat und Methoxypolypropylenglykol(meth)-acrylat bevorzugt sind und Methoxypolyethylenglykolmethacrylat besonders bevorzugt ist.

Die Polyalkylenglykole enthalten dabei 3 bis 50, insbesondere 5 bis 40 und vor allem 10 bis 30 Alkylenoxideinheiten.

Der Anteil der nichtionischen Monomere (c) an den erfindungsgemäß zu verwendenden Copolymeren beträgt 2 bis 20 mol-%, vorzugsweise 5 bis 15 mol-% und vor allem 5 bis 10 mol-%.

Die erfindungsgemäß zu verwendenden Copolymere haben in der Regel ein mittleres Molekulargewicht M_{w} von 3 000 bis 50 000, bevorzugt von 10 000 bis 30 000 und besonders bevorzugt von 15 000 bis 25 000.

Der K-Wert der Copolymere liegt üblicherweise bei 15 bis 40, insbesondere bei 20 bis 35, vor allem bei 27 bis 30 (gemessen in 1 gew.-%iger wäßriger Lösung bei 25°C, nach H. Fikentscher, Cellulose-Chemie, Bd. 13, S. 58-64 und 71-74 (1932)).

Die erfindungsgemäß zu verwendenden Copolymere können durch radikalische Polymerisation der Monomere hergestellt werden. Dabei kann nach allen bekannten radikalischen Polymerisationsverfahren gearbeitet werden. Neben der Polymerisation in Substanz sind insbesondere die Verfahren der Lösungspolymerisation und der Emulsionspolymerisation zu nennen, wobei die Lösungspolymerisation bevorzugt ist.

Die Polymerisation wird vorzugsweise in Wasser als Lösungsmittel durchgeführt. Sie kann jedoch auch in alkoholischen Lösungsmitteln, insbesondere C₁-C₄-Alkoholen, wie Methanol, Ethanol und Isopropanol, oder Mischungen dieser Lösungsmittel mit Wasser vorgenommen werden.

Als Polymerisationsinitiatoren eignen sich sowohl thermisch als auch photochemisch (Photoinitiatoren) zerfallende und dabei Radikale bildende Verbindungen.

Unter den thermisch aktivierbaren Polymerisationsinitiatoren sind Initiatoren mit einer Zerfallstemperatur im Bereich von 20 bis 180°C, insbesondere von 50 bis 90°C, bevorzugt. Beispiele für geeignete thermische Initiatoren sind anorganische Peroxoverbindungen, wie Peroxodisulfate (Ammonium- und vorzugsweise Natriumperoxodisulfat), Peroxosulfate, Percarbonate und Wasserstoffperoxid; organische Peroxoverbindungen, wie Diacetylperoxid, Di-tert.-butylperoxid, Diamylperoxid, Dioctanoylperoxid, Didecanoylperoxid, Dilauroylperoxid, Dibenzoylperoxid; Bis(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat; Azoverbindungen, wie 2,2'-Azobisisobutyronitril, 2,2'-Azobis(2-methylbutyronitril) und Azobis(2-amidopropan)dihydrochlorid.

Diese Initiatoren können in Kombination mit reduzierenden Verbindungen als Starter/Regler-Systeme zum Einsatz kommen. Als Beispiele für derartige reduzierende Verbindungen seien phosphorhaltige Verbindungen; wie phosphorige Säure, Hypophosphite und Phosphinate, schwefelhaltige Verbindungen, wie Natriumhydrogensulfit, Natriumsulfit und Natriumformaldehydsulfoxilat, sowie Hydrazin genannt.

Beispiele für geeignete Photoinitiatoren sind Benzophenon, Acetophenon, Benzoinether, Benzyldialkylketone und deren Derivate.

Vorzugsweise werden thermische Initiatoren eingesetzt, wobei anorganische Peroxoverbindungen, insbesondere Natriumperoxodisulfat (Natriumpersulfat), bevorzugt sind. Besonders vorteilhaft kommen die Peroxoverbindungen in Kombination mit schwefelhaltigen Reduktionsmitteln, insbesondere Natriumhydrogensulfit, als Redoxinitiatorsystem zum Einsatz. Bei Verwendung dieses Starter/Regler-Systems werden Copolymere erhalten, die als Endgruppen -SO₃⁻ Na⁺ und/oder-SO₄⁻ Na⁺ enthalten.

Alternativ können auch phosphorhaltige Starter/Regler-Systeme verwendet werden, z.B. Hypophosphite/Phosphinate.

Die Mengen Photoinitiator bzw. Starter/Regler-System sind auf die jeweils verwendeten Monomeren abzustimmen. Wird beispielsweise das bevorzugte System Peroxodisulfat/Hydrogensulfit verwendet, so werden üblicherweise 2 bis 6 Gew.-%, vorzugsweise 3 bis 5 Gew.-%, Peroxodisulfat und in der Regel 5 bis 30 Gew.-%, vorzugsweise 5 bis 10 Gew.-%, Hydrogensulfit, jeweils bezogen auf die Gesamtmenge der Monomere (a), (b) und (c), eingesetzt.

Gewünschtenfalls können auch Polymerisationsregler zum Einsatz kommen. Geeignet sind die dem Fachmann bekannten Verbindungen, z.B. Schwefelverbindungen, wie Mercaptoethanol, 2-Ethylhexylthioglykolat, Thioglykolsäure und Dodecylmercaptan. Wenn Polymerisationsregler verwendet werden, beträgt ihre Einsatzmenge in der Regel 0,1 bis 15 Gew.-%, bevorzugt 0,1 bis 5 Gew.-% und besonders bevorzugt 0,1 bis 2,5 Gew.-%, jeweils bezogen auf die Gesamtmenge der Monomere (a), (b) und (c).

Die Polymerisationstemperatur liegt in der Regel bei 30 bis 200°C, bevorzugt bei 50 bis 150°C und besonders bevorzugt bei 80 bis 120°C.

Die Polymerisation kann unter atmosphärischem Druck durchgeführt werden, vorzugsweise wird sie jedoch in geschlossenem System unter dem sich entwickelnden Eigendruck vorgenommen.

Bei der Herstellung der erfindungsgemäß zu verwendenden Copolymere können die Monomere (a), (b) und (c) als solche eingesetzt werden, es können jedoch auch Reaktionsmischungen zum Einsatz kommen, die bei der Herstellung der Monomere (c) anfallen. So kann beispielsweise anstelle von Methoxypolyethylenglykolmethacrylat das bei der Veresterung von Polyethylenglykolmonomethylether mit einem Überschuß Methacrylsäure anfallende Monomergemisch verwendet werden. Vorteilhaft kann die Veresterung auch in situ im Polymerisationsgemisch durchgeführt werden, indem (1) Acrylsäure, (2) ein Gemisch von Methacrylsäure und Polyethylenglykolmonomethylether und (3) Radikalstarter parallel zusammengegeben werden. Gegebenenfalls kann dabei ein für die Veresterung notwendiger Katalysator, wie Methansulfonsäure oder p-Toluolsulfonsäure, zusätzlich eingesetzt werden.

Die erfindungsgemäß zu verwendenden Copolymere können auch durch polymeranaloge Reaktion, z.B. durch Umsetzung eines Acrylsäure/Methacrylsäure-Copolymers mit Polyalkylenglykolmonoalkylether, hergestellt werden. Bevorzugt ist jedoch die radikalische Copolymerisation der Monomere.

Wenn für die Anwendung gewünscht, können die bei der Herstellung der erfindungsgemäß zu verwendenden carbonsäuregruppenhaltigen Copolymere anfallenden wäßrigen Lösungen durch Zugabe von Base, insbesondere von Natronlauge, neutralisiert oder teilneutralisiert, d.h. auf einen pH-Wert im Bereich von 4 - 8, vorzugsweise 4,5 - 7,5, eingestellt, werden.

Die erfindungsgemäß verwendeten Copolymere eignen sich hervorragend als Zusatz zu Phosphat und/oder Phosphonat enthaltenden wäßrigen Systemen in-industriellen technischen Anlagen.

Besondere Bedeutung haben sie als Zusatz zu den insbesondere bei Wärmeübertragunsgsprozessen eingesetzten Wasserkreisläufen, die Polyphosphat- und Phosphonationen zur Härtestabilisierung und zum Korrosionsschutz enthalten.

Die erfindungsgemäß zu verwendenden Copolymere stabilisieren diese Ionen, fördern damit deren Wirkung, und verhindern auch bei hohen Wasserhärten und hohen pH-Werten wirkungsvoll die Bildung von unerwünschten schwerlöslichen Phosphat- und Phosphonatbelägen und -niederschlägen.

Sie können den wäßrigen Systemen, also z.B. den Wasserkreisläufen, separat zugegeben werden oder bereits vorab mit den weiteren Zusatzstoffen gemischt werden und z.B. in Form von insbesondere wäßrigen Formulierungen, die auch die Polyphosphate und/oder Phosphonate sowie gewünschtenfalls weitere Bestandteile, wie Biozide und Tenside, enthalten, eingesetzt werden.

Als Beispiele für die in diesen Formulierungen zur Wasserbehandlung und/oder zum Korrosionsschutz eingesetzten Polyphosphate, die linear oder ringförmig sein können, seien Natriumtriphosphat und Natriumhexametaphosphat genannt.

Enfindungsgemäß werden neben den eingangs erwähnten Salzen HEDP, GBTC und ATMP Ethylendiamintetramethylenphosphonat, Hexamethylendiamintetramethylenphosphonat und Diethylentriaminpentamethylenphosphonat verwendet.

Die erfindungsgemäß zu verwendenden Copolymere sind aber auch als Zusatz zu wäßrigen Systemen, die ohnehin phosphathaltig sind, denen Phosphate also nicht erst zugesetzt werden, von besonderem Interesse, da sie auch hier die Bildung schwerlöslicher Phosphatniederschläge und -beläge verhindern.

Als bevorzugtes Beispiel für diese Einsatzgebiete sei die Zuckerindustrie genannt. Die Copolymere können hier in den zur Eindampfung vorgesehenen wäßrigen Zuckerlösungen die Bildung unerwünschter Phosphatniederschläge wirkungsvoll verhindern.

### Beispiele

### A) Herstellung von Alkylenoxideinheiten enthaltenden Copolymeren

### Copolymer I

In einem Reaktor mit Stickstoffzuführung, Rückflußkühler und Dosiervorrichtung wurde eine Mischung von 619 g destilliertem Wasser und 2,2 g phosphoriger Säure-unter Stickstoffzufuhr und Rühren auf 100°C Innentemperatur erhitzt. Dann wurden parallel (1) ein Gemisch aus 123,3 g Acrylsäure und 368,5 g destilliertem Wasser, (2) ein Gemisch aus 72,0 g destilliertem Wasser und 216 g einer Mischung von Methacrylsäure und Methoxypolyethylenglykolmethacrytat (M_{w} des Polyethylenglykols: 1 100 im Molverhältnis 4:1, (3) 46 g einer 40 gew.-%igen wäßrigen Natriumhydrogensulfitlösung und (4) eine Lösung von 18,4 g Natriumperoxodisulfat in 164,6g destilliertem Wasser kontinuierlich in 5 h zugegeben. Nach zweistündigem Nachrühren unter Stickstoff bei 100°C und anschließendem Abkühlen auf Raumtemperatur wurden 190 g einer 50 gew.-%igen Natronlauge zugegeben.

Es wurde eine leicht gelbliche, klare Lösung des Copolymers I mit einem Feststoffgehalt von 25,7 Gew.-% und einem K-Wert von 27,2 (1 gew.-%ige wäßrige Lösung, 25°C) erhalten.

### B) Anwendung zur Inhibierung von Calciumphosphat und Calciumphosphonat in Kühlwasserkreisläufen

### B1) Calciumphosphat-Inhibierung

Für die Prüfung der calciumphosphatinhibierenden Wirkung von Copolymer I wurden folgende Reagenzien eingesetzt:
Vanadat/Molybdat-Reagenz zur Phosphatbestimmung (Merck)

| | |
|---|---|
| Testlösung A: | 0,42 g einer 5 gew.-%igen wäßrigen H₃PO₄-Lösung, mit destilliertem Wasser auf 1 laufgefüllt |
| Testlösung B: | 1,64 g/l CaCl₂ · 6 H₂O |
| | 0,79 g/l MgSO₄ · 7 H₂O |
| | 1,08 g/l NaHCO₃ |

Es wurde wie folgt vorgegangen:
100 ml der Testlösung A wurden in einem verschließbaren 300 ml-Becher aus Lupolen^{®} (BASF) vorgelegt, dann wurden zunächst jeweils 2, 4 bzw. 5 ml einer 0,1 gew.-%-igen wäßrigen Lösung des Copolymers I und anschließend 100 ml der Testlösung B zugegeben.

Die hierbei jeweils erhaltene Prüflösung wies folgende Parameter auf:
Gesamthärte: 5,4 mmol/l
Carbonathärte: 6,42 mmol/l
Phosphatgehalt: 10-ppm
Polymergehalt: 10, 20 bzw. 25 ppm

Die verschlossenen Becher wurden dann 24 h bei 70°C geschüttelt (Schüttelwasserbad 1086, GFL). Nach Abkühlen auf Raumtemperatur (ca. 1h) wurden die Probelösungen über einen Membranfilter der Porenweite 0,45 µm abgesaugt.

Zur Bestimmung der Restphosphatmenge wurden 50 ml des Filtrats mit 10 ml des Vanadat/Molybdat-Reagenz versetzt. Nach 10 min wurde der Phosphatgehalt photometrisch (Dr. Lange Photometer, Typ LP2W) über die Intensität der Gelbfärbung anhand einer Kalibrierkurve bestimmt.

In Tabelle 1 ist die jeweils erreichte Inhibierung in % angegeben. Bei einem Inhibierungsgrad von 100% hat sich kein Calciumphosphatniederschlag gebildet, bei Inhibierungsgraden < 100% ist der Phosphatgehalt der Prüflösung durch Bildung von Calciumphosphat entsprechend erniedrigt worden.

**Tabelle 1**

| Konzentration des Copolymers 1 in der Prüflösung | 10 ppm | 20 ppm | 25 ppm |
|---|---|---|---|
| Phosphatinhibierung | 97% | 100% | 100% |

### B2) Calciumphosphonat-Inhibierung

Für die Prüfung der calciumphosphonatinhibierenden Wirkung von Copolymer I wurden folgende Reagenzien eingesetzt:
Dr. Lange Fertigtest LCK 350

| | |
|---|---|
| Testlösung A: | 2,2 g einer 1 gew.-%igen Lösung von HEDP (Dequest^{®} 2010, Solutia), mit destilliertem Wasser auf 1 laufgefüllt |
| Testlösung B: | 1,64 g/l CaCl₂ · 6 H₂O |
| | 0,79 g/l MgSO₄· 7 H₂O |
| | 1,08 g/l NaHCO₃ |

Es wurde wie folgt vorgegangen:
100 ml der Testlösung A wurden in einem verschließbaren 300 ml-Becher aus Lupolen^{®} (BASF) vorgelegt, dann wurden zunächst jeweils 2, 4 bzw. 5 ml einer 0,1 gew.-%-igen wäßrigen Lösung des Copolymers I und anschließend 100 ml der Testlösung B zugegeben.

Die hierbei jeweils erhaltene Prüflösung wies folgende Parameter auf:
Gesamthärte: 5,4 mmol/l
Carbonathärte: 6,42 mmol/l
Phosphonatgehalt, berechnet als Phosphat: 10 ppm
Polymergehalt: 10,20 bzw. 25 ppm

Die verschlossenen Becher wurden dann 24 h bei 70°C geschüttelt (Schüttelwasserbad 1086, GFL). Nach Abkühlen auf Raumtemperatur (ca. 1 h) wurden die Probelösungen über einen Membranfilter der Porenweite 0,45 µm abgesaugt.

Die Restphosphonatmenge im Filtrat wurde mit dem Dr. Lange Fertigtest LCK 350 photometrisch bestimmt.

In Tabelle 2 ist die jeweils erreichte Inhibierung in % angegeben. Bei einem Inhibierungsgrad von 100% hat sich kein Calciumphosphonatniederschlag gebildet, bei Inhibierungsgraden < 100% ist der Phosphonatgehalt der Prüflösung durch Bildung von Calciumphosphonat entsprechend erniedrigt worden.

**Tabelle 2**

| Konzentration des Copolymers I in der Prüflösung | 10 ppm | 20 ppm | 25 ppm |
|---|---|---|---|
| Phosphonatinhibierung | 100% | 100% | 100% |

## Patentansprüche

1. Verwendung von Alkylenoxideinheiten enthaltenden Copolymeren, die
(a) 50 bis 93 mol-% Acrylsäure und/oder eines wasserlöslichen Salzes der Acrylsäure,
(b) 5 bis 30 mol-% Methacrylsäure und/oder eines wasserlöslichen Salzes der Methacrylsäure und
(c) 2 bis 20 mol-% mindestens eines nichtionischen Monomers der Formel I 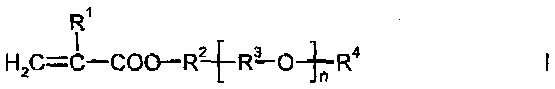 in der die Variablen folgende Bedeutung haben:
R¹ Wasserstoff oder Methyl;
R² eine chemische Bindung oder unverzweigtes oder verzweigtes C₁-C₆-Alkylen;
R³ gleiche oder verschiedene unverzweigte oder verzweigte C₂-C₄-Alkylenreste;
R⁴ unverzweigtes oder verzweigtes C₁-C₆-Alkyl;
n 3 bis 50,
statistisch oder blockweise einpolymerisiert enthalten, als Zusatz zu Phosphonat ausgewählt aus der Gruppe bestehend aus 1-Hydroxyethan-1,1-diphosphonsäure (HEDP), 2-Phosphonobutan-1,2,4-tricarbonsäure (GBTC), Aminotrimethylenphosphonsäure (ATMP), Ethylendiamintetramethylenphosphonat, Hexamethylendiamintetramethylphosphonat und Diethylentriaminpentamethylphosphonat enthaltenden wäßrigen Systemen in industriellen technischen Anlagen.

2. Verwendung nach Anspruch 1, **dadurch gekennzeichnet, daß** die Copolymere 65 bis 85 mol-% der Komponente (a), 10 bis 25 mol-% der Komponente (b) und 5 bis 15 mol-% der Komponente (c) einpolymerisiert enthalten.

3. Verwendung nach Anspruch 1 oder 2, **dadurch gekennzeichnet, daß** die Copolymere 65 bis 75 mol-% der Komponente (a), 15 bis 25 mol-% der Komponente (b) und 5 bis 10 mol-% der Komponente (c) einpolymerisiert enthalten.

4. Verwendung nach den Ansprüchen 1 bis 3, **dadurch gekennzeichnet, daß** die Copolymere als Komponente (c) ein nichtionisches Monomer der Formel I, in der R¹ Methyl, R² eine chemische Bindung, R³ C₂-C₃-Alkylen, R⁴ C₁-C₂-Alkyl und n 5 bis 40 bedeuten, einpolymerisiert enthalten.

5. Verwendung nach den Ansprüchen 1 bis 4, **dadurch gekennzeichnet, daß** die Copolymere als Komponente (c) ein nichtionisches Monomer der Formel I, in der R¹ Methyl, R² eine chemische Bindung, R³ Ethylen, R⁴ Methyl und n 10 bis 30 bedeuten, einpolymerisiert enthalten.

6. Verwendung nach den Ansprüchen 1 bis 5, **dadurch gekennzeichnet, daß** die Copolymere wäßrigen Systemen zugesetzt werden, die im Kreis geführt werden.

7. Verwendung nach Anspruch 6, **dadurch gekennzeichnet, daß** die Copolymere den bei Wärmeübertragungsprozessen eingesetzten Wasserkreisläufen zugesetzt werden.

8. Verwendung nach den Ansprüchen 1 bis 5, **dadurch gekennzeichnet, daß** die Copolymere wäßrigen Systemen zugesetzt werden, die einer Aufkonzentrierung unterworfen werden.

9. Verwendung nach Anspruch 8, **dadurch gekennzeichnet, daß** die Copolymere den in der Zuckerindustrie anfallenden, zur Eindampfung vorgesehenen wäßrigen Zuckerlösungen zugesetzt werden.

10. Formulierungen zur Wasserbehandlung und/oder Korrosionsinhibierung, die Alkylenoxideinheiten enthaltende Copolymeren enthalten, die
(a) 50 bis 93 mol-% Acrylsäure und/oder eines wasserlöslichen Salzes der Acrylsäure,
(b) 5 bis 30 mol-% Methacrylsäure und/oder eines wasserlöslichen Salzes der Methacrylsäure und
(c) 2 bis 20 mol-% mindestens eines nichtionischen Monomers der Formel I 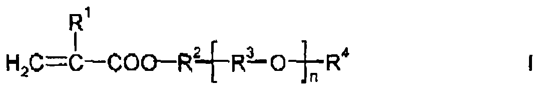 in der die Variablen folgende Bedeutung haben:
R¹ Wasserstoff oder Methyl;
R² eine chemische Bindung oder unverzweigtes oder verzweigtes C₁-C₆-Alkylen;
R³ gleiche oder verschiedene unverzweigte oder verzweigte C₂-C₄-Alkylenreste;
R⁴ unverzweigtes oder verzweigtes C₁-C₆-Alkyl;
n 3 bis 50,
statistisch oder blockweise einpolymerisiert enthalten, und Phosphonat ausgewählt aus der Gruppe bestehend aus 1-Hydroxyethan-1,1-diphosphonsäure (HEDP), 2-Phosphonobutan-1,2,4-tricarbonsäure (GBTC), Aminotrimethylenphosphonsäure (ATMP), Ethylendiamintetramethylenphosphonat, Hexamethylendiamintetramethylphosphonat und Diethylentriaminpentamethylphosphonat enthalten.

## Claims

1. The use of copolymers comprising alkylene oxide units, which copolymers comprise incorporated randomly or blockwise by polymerization
(a) 50 to 93 mol% of acrylic acid and/or a water-soluble salt of acrylic acid,
(b) 5 to 30 mol% of methacrylic acid and/or a water-soluble salt of methacrylic acid and
(c) 2 to 20 mol% of at least one nonionic monomer of the formula I 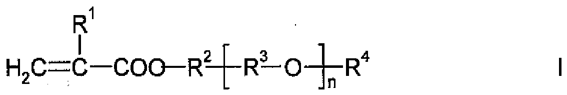 where the variables have the following meaning:
R¹ hydrogen or methyl;
R² a chemical bond or unbranched or branched C₁-C₆-alkylene;
R³ identical or different unbranched or branched C₂-C₄-alkylene radicals;
R⁴ unbranched or branched C₁-C₆-alkyl;
n 3 to 50,
as additive to aqueous systems comprising phosphonate selected from the group consisting of 1-hydroxyethane-1,1-diphosphonic acid (HEDP), 2-phosphonobutane-1,2,4-tricarboxylic acid (GBTC), aminotrimethylenephosphonic acid (ATMP), ethylenediaminetetramethylene phosphonate, hexamethylenediaminetetramethyl phosphonate and diethylenetriaminepentamethyl phosphonate in industrial technical plants.

2. The use according to claim 1, wherein the copolymers comprise, incorporated by polymerization, 65 to 85 mol% of component (a), 10 to 25 mol% of component (b) and 5 to 15 mol% of component (c).

3. The use according to claim 1 or 2, wherein the copolymers comprise, incorporated by polymerization, 65 to 75 mol% of component (a), 15 to 25 mol% of component (b) and 5 to 10 mol% of component (c).

4. The use according to claims 1 to 3, wherein the copolymers comprise, incorporated by polymerization, as component (c) a nonionic monomer of the formula I, where R¹ is methyl, R² is a chemical bond, R³ is C₂-C₃-alkylene, R⁴ is C₁-C₂-alkyl and n is 5 to 40.

5. The use according to claims 1 to 4, wherein the copolymers comprise, incorporated by polymerization, as component (c) a nonionic monomer of the formula I, where R¹ is methyl, R² is a chemical bond, R³ is ethylene, R⁴ is methyl and n is 10 to 30.

6. The use according to claims 1 to 5, wherein the copolymers are added to aqueous systems which are circulated.

7. The use according to claim 6, wherein the copolymers are added to the water circuits used in heat-transfer processes.

8. The use according to claims 1 to 5, wherein the copolymers are added to aqueous systems which are subjected to concentration.

9. The use according to claim 8, wherein the copolymers are added to the aqueous sugar solutions arising in the sugar industry intended for evaporation.

10. A formulation for water treatment and/or corrosion inhibition which comprises copolymers comprising alkylene oxide units, which copolymers comprise incorporated randomly or blockwise by polymerization
(a) 50 to 93 mol% of acrylic acid and/or a water-soluble salt of acrylic acid,
(b) 5 to 30 mol% of methacrylic acid and/or a water-soluble salt of methacrylic acid and
(c) 2 to 20 mol% of at least one nonionic monomer of the formula I 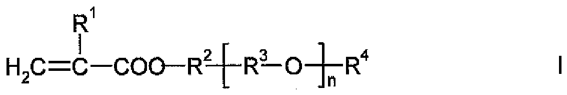 where the variables have the following meaning:
R¹ hydrogen or methyl;
R² a chemical bond or unbranched or branched C₁-C₆-alkylene;
R³ identical or different unbranched or branched C₂-C₄-alkylene radicals;
R⁴ unbranched or branched C₁-C₆-alkyl;
n 3 to 50, and comprises phosphonate selected from the group consisting of 1-hydroxyethane-1,1-diphosphonic acid (HEDP), 2-phosphonobutane-1,2,4-tricarboxylic acid (GBTC), aminotrimethylenephosphonic acid (ATMP), ethylenediaminetetramethylene phosphonate, hexamethylenediaminetetramethyl phosphonate and diethylenetriaminepentamethyl phosphonate.

## Revendications

1. Utilisation de copolymères contenant des unités oxyde d'alkylène, qui contiennent
(a) 50 à 93% en mole d'acide acrylique et/ou d'un sel soluble dans l'eau de l'acide acrylique,
(b) 5 à 30% en mole d'acide méthacrylique et/ou d'un sel soluble dans l'eau de l'acide méthacrylique et
(c) 2 à 20% en mole d'au moins un monomère non ionique de formule I 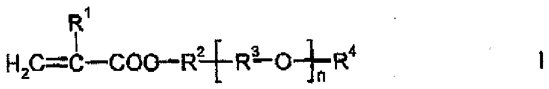 dans laquelle les variables ont la signification suivante :
R¹ hydrogène ou méthyle ;
R² une liaison chimique ou un alkylène en C₁-C₆ non ramifié ou ramifié ;
R³ des radicaux alkylène en C₂-C₄ identiques ou différents, non ramifiés ou ramifiés ;
R⁴ alkyle en C₁-C₆ non ramifié ou ramifié ;
n vaut 3 à 50,
sous forme copolymérisée de manière statistique ou par blocs, comme additif à du phosphonate, choisi dans le groupe constitué par des systèmes aqueux contenant de l'acide 1-hydroxyéthane-1,1-diphosphonique (HEDP), de l'acide 2-phosphonobutane-1,2,4-tricarboxylique (GBTC), de l'acide aminotriméthylènephosphonique (ATMP), de l'éthylènediaminetétraméthylènephosphonate, de l'hexaméthylènediaminetétraméthylphosphonate et du diéthylènetriaminepentaméthylphosphonate dans des installations techniques industrielles.

2. Utilisation selon la revendication 1, **caractérisée en ce que** les copolymères contiennent 65 à 85% en mole du composant (a), 10 à 25% en mole du composant (b) et 5 à 15% en mole du composant (c) sous forme copolymérisée.

3. Utilisation selon la revendication 1 ou 2, **caractérisée en ce que** les copolymères contiennent 65 à 75% en mole du composant (a), 15 à 25% en mole du composant (b) et 5 à 10% en mole du composant (c) sous forme copolymérisée.

4. Utilisation selon les revendications 1 à 3, **caractérisée en ce que** les copolymères contiennent, en tant que composant (c), un monomère non ionique de formule I dans laquelle R¹ signifie méthyle, R² signifie une liaison chimique, R³ signifie C₂-C₃-alkylène, R⁴ signifie C₁-C₂-alkyle et n vaut 5 à 40, sous forme copolymérisée.

5. Utilisation selon les revendications 1 à 4, **caractérisée en ce que** les copolymères contiennent, en tant que composant (c), un monomère non ionique de formule I dans laquelle R¹ signifie méthyle, R² signifie une liaison chimique, R³ signifie éthylène, R⁴ signifie méthyle et n vaut 10 à 30, sous forme copolymérisée.

6. Utilisation selon les revendications 1 à 5, **caractérisée en ce que** les copolymères sont ajoutés à des systèmes aqueux qui sont guidés en circuit.

7. Utilisation selon la revendication 6, **caractérisée en ce que** les copolymères sont ajoutés aux circuits d'eau utilisés dans les procédés de transfert de chaleur.

8. Utilisation selon les revendications 1 à 5, **caractérisée en ce que** les copolymères sont ajoutés à des systèmes aqueux qui sont soumis à une concentration.

9. Utilisation selon la revendication 8, **caractérisée en ce que** les copolymères sont ajoutés aux solutions aqueuses de sucre produites dans l'industrie du sucre, destinées à l'évaporation.

10. Formulations pour le traitement de l'eau et/ou l'inhibition de la corrosion, qui contiennent des copolymères contenant des unités d'oxyde d'alkylène, qui contiennent
(a) 50 à 93% en mole d'acide acrylique et/ou d'un sel soluble dans l'eau de l'acide acrylique,
(b) 5 à 30% en mole d'acide méthacrylique et/ou d'un sel soluble dans l'eau de l'acide méthacrylique et
(c) 2 à 20% en mole d'au moins un monomère non ionique de formule I 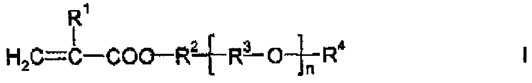 dans laquelle les variables ont la signification suivante :
R¹ hydrogène ou méthyle ;
R² une liaison chimique ou un alkylène en C₁-C₆ non ramifié ou ramifié ;
R³ des radicaux alkylène en C₂-C₄ identiques ou différents, non ramifiés ou ramifiés ;
R⁴ alkyle en C₁-C₆ non ramifié ou ramifié ;
n vaut 3 à 50,
sous forme copolymérisée de manière statistique ou par blocs, et du phosphonate, choisi dans le groupe constitué par des systèmes aqueux contenant de l'acide 1-hydroxyéthane-1,1-diphosphonique (HEDP), de l'acide 2-phosphonobutane-1,2,4-tricarboxylique (GBTC), de l'acide aminotriméthylènephosphonique (ATMP), de l'éthylènediaminetétraméthylènephosphonate, de l'hexaméthylènediaminetétraméthylphosphonate et du diéthylènetriaminepentaméthylphosphonate.
